# FASCICULE DE BREVET EUROPEEN

(11) **EP 3 201 491 B1**
(45) Date de publication et mention de la délivrance du brevet: **31.10.2018**
(21) Numéro de dépôt: 15766547.2
(22) Date de dépôt: 22.09.2015
(51) Int. Cl.: F16F 15/129, F16F 15/14, F16D 13/64

(54) **DISQUE DE FRICTION POUR EMBRAYAGE**
KUPPLUNGSREIBUNGSSCHEIBE
CLUTCH FRICTION DISC

(30) Priorité: 30.09.2014 FR 1459294
(43) Date de publication de la demande: 09.08.2017
(73) Titulaire: Valeo Embrayages, 80009 Amiens Cedex 2 (FR)
(72) Inventeur: MARECHAL, Olivier, F-80000 Amiens (FR); BOITELLE, Maxence, F-62118 Biache Saint Vaast (FR); BAGARD, Didier, F-80009 Amiens Cedex 1 (FR)
(74) Mandataire: Cardon, Nicolas
(86) Numéro de dépôt international: PCT/EP2015/071791
(87) Numéro de publication internationale: WO 2016/050569

(56) Documents cités:
- EP-A2- 2 711 586
- WO-A1-2011/060752
- FR-A1- 2 845 745
- US-A1- 2010 209 183

## Description

La présente invention concerne un disque de friction pour embrayage.

L'invention s'applique notamment à un embrayage d'un système de transmission de véhicule automobile.

Afin de filtrer des oscillations de torsion se propageant dans le système de transmission du fait des acyclismes du moteur thermique, il est connu d'associer un batteur au disque de friction. La demande WO 2011/060752 divulgue ainsi un batteur intégré dans un disque de friction. WO2011/060752 enseigne de protéger le batteur lorsque des couples trop importants sont appliqués sur ce dernier grâce à un limiteur de couple qui immobilise les éléments du batteur formant des logements pour des ressorts de ce dernier par rapport au moyeu du disque tant que le couple appliqué par le batteur sur le limiteur de couple est inférieur à une valeur donnée. Selon WO 2011/060752, le limiteur de couple est disposé axialement par rapport au batteur, de manière à exercer une force de frottement dirigée axialement sur ce dernier pour l'immobiliser par rapport au moyeu du disque.

Une telle solution génère un certain encombrement pour le disque de friction. Cette solution implique également que le disque ait une configuration dans laquelle une pièce immobile par rapport au moyeu est axialement en regard du batteur pour permettre au limiteur de couple d'immobiliser le batteur par rapport au moyeu lorsque le couple est inférieur à la valeur donnée, ce qui impose des contraintes quant à l'architecture du disque de friction.

Il existe un besoin pour bénéficier d'un disque de friction qui remédie à tout ou partie des inconvénients précédemment cités.

L'invention vise à répondre à ce besoin et elle y parvient, selon l'un de ses aspects, à l'aide d'un disque de friction pour embrayage, comprenant :
- au moins une garniture de friction définissant une entrée en couple,
- un moyeu mobile en rotation autour d'un axe et définissant une sortie en couple,
- un dispositif d'amortissement d'oscillations de torsion, porté par le moyeu et disposé hors du chemin emprunté par le couple transmis par le disque entre l'entrée en couple et la sortie en couple, le dispositif d'amortissement présentant une unique fréquence de résonance, et
- un limiteur de couple disposé de manière à exercer une force de frottement comprenant une composante orientée radialement sur le dispositif d'amortissement, cette force maintenant ce dispositif d'amortissement solidaire en rotation du moyeu tant que le couple exercé par le dispositif sur le limiteur de couple est inférieur à une valeur prédéfinie.

Au-delà de la valeur de couple prédéfinie, le dispositif d'amortissement glisse par rapport au moyeu, dissipant ainsi l'énergie associée au couple qu'il subit. La valeur prédéfinie de couple au-delà de laquelle le glissement du dispositif d'amortissement se produit est par exemple comprise entre 4 Nm et 8 Nm, étant par exemple de l'ordre de 5 Nm.

Le dispositif d'amortissement est encore appelé « batteur ». La fréquence de résonance du dispositif d'amortissement est par exemple comprise entre 8 Hz et 14 Hz.

Selon cet aspect de l'invention, le limiteur de couple agit radialement, notamment exclusivement radialement, sur le dispositif d'amortissement d'oscillations de torsion, et non axialement.

Le limiteur de couple peut être disposé radialement dans l'espace compris entre le moyeu et le dispositif d'amortissement d'oscillations de torsion. On évite ainsi de rajouter de l'encombrement axial au disque de friction. Le limiteur de couple peut être formé par une rondelle élastiquement déformable. Cette rondelle peut s'étendre dans l'espace radial compris entre le moyeu du disque et le dispositif d'amortissement d'oscillations de torsion. A l'état libre, cette rondelle peut présenter une forme proche d'un carré, cette forme étant modifiée lorsque la rondelle est introduite entre le moyeu et le dispositif d'amortissement. La rondelle peut être réalisée en acier ressort, par exemple en C67S.

La rondelle élastiquement déformable est par exemple fendue, ce qui peut permettre de confirmer davantage de flexibilité à cette rondelle.

Le dispositif d'amortissement d'oscillations de torsion peut comprendre :
- un composant primaire, sur lequel le limiteur de couple applique la force de frottement,
- un composant secondaire, mobile en rotation par rapport à la composant primaire, et
- une pluralité d'organes de rappel élastiques disposés entre le composant primaire et le composant secondaire, de manière à générer une force s'opposant à la rotation du composant secondaire par rapport au composant primaire.

Dans ce cas, la force de frottement mentionnée ci-dessus maintient le composant primaire solidaire en rotation du moyeu tant que le couple exercé par le dispositif sur le limiteur de couple est inférieur à la valeur prédéfinie, le composant secondaire pouvant pendant ce temps osciller par rapport au composant primaire.

Le dispositif d'amortissement peut être tel que le composant secondaire ait une amplitude de rotation par rapport au composant primaire comprise entre 10° et 20°, cette amplitude de rotation étant de préférence comprise entre 14° et 18°.

Le limiteur de couple peut alors être une rondelle élastiquement déformable, comme mentionné ci-dessus, cette rondelle étant disposée radialement entre le composant primaire du dispositif d'amortissement et le moyeu, et solidarisant ces derniers en rotation tant que le couple exercé par le dispositif d'amortissement sur le limiteur de couple est inférieur à la valeur prédéfinie.

Chaque organe de rappel élastique peut s'étendre entre une première extrémité en appui contre une face d'une paroi radiale du composant primaire et une deuxième extrémité en appui contre une face d'un nez radial du composant secondaire.

Chaque paroi radiale du composant primaire peut interagir avec deux organes de rappel élastique, ladite paroi étant disposée angulairement entre ces deux organes de rappel élastique, chaque nez radial du composant secondaire peut interagir avec deux organes de rappel élastique, ledit nez étant disposé angulairement entre les deux organes de rappel élastique.

Au sens de la présente demande :
- « axialement » signifie « parallèlement à l'axe de rotation du moyeu »,
- « radialement » signifie « perpendiculairement à l'axe de rotation du moyeu et le long d'un axe coupant cet axe de rotation »,
- « orthoradialement » signifie «perpendiculairement à une direction radiale, dans un plan perpendiculaire à l'axe de rotation », et
- « angulairement » signifie « autour de l'axe de rotation du moyeu».

Chaque organe de rappel élastique peut ainsi être maintenu angulairement entre une paroi radiale du composant primaire et un nez du composant secondaire.

Le composant primaire peut être monobloc ou être réalisé à l'aide de plusieurs pièces rigidement couplées entre elles.

Le composant primaire peut définir une pluralité de logements maintenant axialement les organes de rappel élastique.

Le composant primaire peut comprendre un chanfrein ménagé à une de ses extrémités axiales et en regard du limiteur de couple. Ce chanfrein peut permettre de faciliter le montage du dispositif d'amortissement sur le moyeu.

Le dispositif d'amortissement peut comprendre un système générateur d'hystérésis pour le déplacement du composant secondaire par rapport au composant primaire. Ce système générateur d'hystérésis met par exemple en oeuvre des rampes coopérant entre elles. Le système générateur d'hystérésis exerce par exemple sur le composant secondaire un couple compris entre 0,1 Nm et 2 Nm, la valeur maximale de couple d'hystérésis étant obtenue lorsque le composant secondaire tourne par rapport au composant primaire d'une valeur angulaire égale à l'amplitude de rotation.

Une rondelle de friction peut être montée sur le composant primaire du dispositif d'amortissement et venir en appui contre un support des garnitures de friction. Cette rondelle peut ainsi être disposée axialement entre le composant primaire du dispositif et le support des garnitures.

Le disque de friction peut être dépourvu de tout amortisseur d'oscillations de torsion autre que le dispositif d'amortissement d'oscillations de torsion ou « batteur » précité, auquel cas le support des garniture(s) est solidaire en rotation du moyeu.

En variante, le disque de friction peut comprendre un amortisseur d'oscillations de torsion en plus du dispositif d'amortissement d'oscillations de torsion précité. Le support de garniture(s) de friction est alors mobile en rotation par rapport au moyeu et l'amortisseur de torsion est disposé entre le support et le moyeu et s'oppose à la rotation du support par rapport au moyeu. L'amortisseur d'oscillations de torsion comprend par exemple une pluralité de ressorts. Le fait que le limiteur de couple agisse radialement sur le dispositif d'amortissement d'oscillations de torsion permet, lorsque ce dispositif d'amortissement est axialement en regard du support de garniture(s), que ce dernier ne soit pas solidaire en rotation du moyeu, et donc que le disque comprenne cet autre amortisseur d'oscillations de torsion.

L'invention a encore pour objet, selon un autre de ses aspects, un élément pour embrayage comprenant :
- une entrée en couple,
- un moyeu mobile en rotation autour d'un axe et définissant une sortie en couple,
- un dispositif d'amortissement d'oscillations de torsion, porté par le moyeu et disposé hors du chemin emprunté par le couple transmis par l'élément entre l'entrée en couple et la sortie en couple, le dispositif d'amortissement présentant une unique fréquence de résonance, et
- un limiteur de couple disposé de manière à exercer une force de frottement comprenant une composante orientée radialement sur le dispositif d'amortissement, cette force maintenant ce dispositif solidaire en rotation du moyeu tant que le couple exercé par le dispositif sur le limiteur de couple est inférieur à une valeur prédéfinie.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique et partielle un disque de friction selon un exemple de mise en oeuvre de l'invention,
- la figure 2 représente un détail du disque de friction de la figure 1,
- la figure 3 représente une rondelle élastiquement déformable avant son montage dans le disque de friction de la figure 1 pour y servir de limiteur de couple,
- la figure 4 représente la rondelle de la figure 3 lorsqu'elle est montée dans le disque de friction de la figure 1,
- la figure 5 est une vue en coupe du disque de friction de la figure 1, et
- la figure 6 est une vue en coupe du disque de friction de la figure 1, cette vue étant décalée angulairement par rapport à celle selon la figure 5.

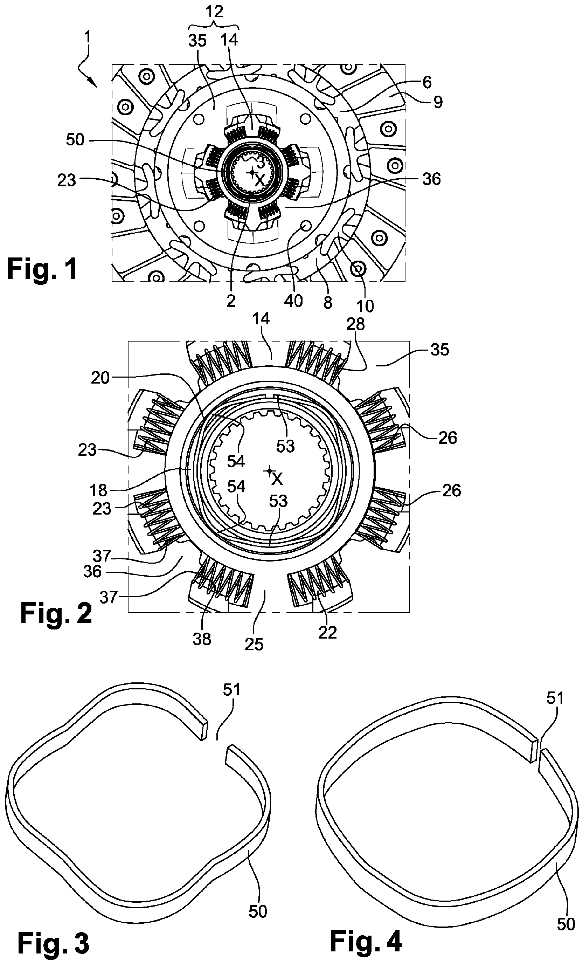

La figure 1 représente un disque de friction 1 pour embrayage d'un système de transmission de véhicule automobile.

Ce disque de friction 1 comprend dans l'exemple considéré un moyeu 2 apte à entraîner en rotation autour d'un axe X un arbre non représenté d'une boîte de vitesses au moyen de cannelures 3.

Le disque de friction 1 comprend encore un support de garnitures de friction 6. Le support 6 est dans l'exemple considéré en deux parties. Un voile 7 s'étend radialement depuis le moyeu 2 et une plaque 8 supportant des garnitures de friction 9 est riveté sur le voile 7 et s'étend radialement extérieurement par rapport à ce voile 7. Une pluralité de découpés 10 de même forme et ménagées dans la plaque 8 se succèdent par exemple autour de l'axe X.

Dans l'exemple considéré, le support 6 est solidaire en rotation du moyeu 2, de sorte que les garnitures de friction 9, qui forment l'entrée en couple du disque de friction 1, sont solidaires en rotation du moyeu 2 qui forme la sortie en couple du disque de friction 1.

Le disque de friction 1 comprend encore un dispositif 12 de filtration d'oscillations de torsion. Le dispositif 12 est ici un batteur, c'est-à-dire qu'il est situé hors du chemin emprunté par le couple que transmet le disque 1 depuis les garnitures de friction 9 jusqu'au moyeu 2, et qu'il comprend une unique fréquence de résonance. La fréquence de résonance du batteur 12 est dans l'exemple considéré comprise entre 8 Hz et 14 Hz.

Le batteur 12 comprend dans l'exemple considéré un composant primaire 14 disposé autour du moyeu 2, un espace radial étant ménagé entre ce composant 14 et le moyeu 2.

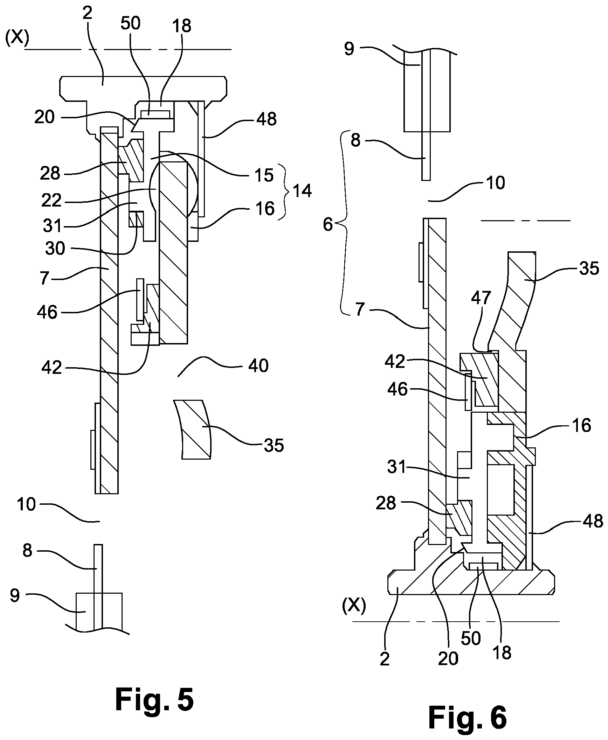

Dans l'exemple décrit, le composant primaire 14 est réalisé en deux parties 15 et 16 qui sont solidarisées entre elles et qui se succèdent globalement le long de l'axe X. Comme on peut le voir sur les figures 5 et 6, la partie 15 la plus proche du voile 7 est à une distance radiale non nulle du moyeu 2, de sorte qu'un espace radial 18 est ménagé entre cette partie 15 du composant primaire 14 et le moyeu 2. Comme représenté sur les figures, la partie 15 comprend, à son extrémité axiale radialement intérieure un chanfrein 20 facilitant le montage du composant primaire 14 sur le moyeu 2.

La partie 16, non représentée sur les figures 1 et 2, vient quant à elle directement au contact du moyeu 2.

Comme on peut le voir sur la figure 5, les deux parties 15 et 16 du composant primaire 14 présentent localement des formes complémentaires de manière à définir entre elles des logements 22 pour des organes de rappel élastique 23 qui sont ici des ressorts droits. Dans l'exemple considéré, huit ressorts 23 se succèdent angulairement dans le composant primaire 14 autour de l'axe X, chaque ressort 23 étant reçu dans un logement 22. Le ressort unique modélisant l'ensemble des ressorts 23 du batteur présente par exemple un coefficient de raideur angulaire compris entre 0.02 Nm/° à 0.1 Nm/°. Deux logements consécutifs 22 sont séparés par une paroi radiale 25 du composant primaire 14 qui définit deux faces 26 opposées et sensiblement radiales.

Comme représenté sur les figures 5 et 6, le composant primaire 14 est dans l'exemple considéré solidaire d'une rondelle de friction 28 disposée axialement entre le composant primaire 14 et le voile 7. La rondelle de friction 28 présente par exemple un trou 30 dans lequel une portion en saillie 31 de la partie 15 du composant primaire 14 est reçue de façon à immobiliser le composant primaire 14 par rapport à a rondelle de friction 28.

Dans l'exemple considéré, la rondelle de friction 28 est axialement en appui contre le voile 7 mais non solidaire de ce dernier.

Le dispositif d'amortissement des oscillations de torsion 12 présente encore dans l'exemple considéré un composant secondaire 35, mobile en rotation par rapport au composant primaire 14 avec un débattement limité du fait de la présence des ressorts 23. L'amplitude de rotation du composant secondaire 35 par rapport au composant primaire 14 est dans l'exemple considéré comprise entre 14° et 18°.

Comme représenté sur les figures 1 et 2, le composant secondaire 35 s'étend globalement radialement extérieurement par rapport au composant primaire 14. Le composant secondaire 35 définit une masse qui présente par exemple un moment d'inertie compris entre 0.0005 et 0.002 Kg.m².

Comme on peut le voir notamment sur la figure 2, le composant secondaire 35 peut comprendre une pluralité de nez radiaux 36 faisant saillie vers l'axe X. Chacun de ces nez 36 est disposé dans un logement 22 sensiblement à mi-longueur de celui-ci. Chacun de ces nez 36 présente deux faces 37 sensiblement radiales et chacune de ces faces 37 porte un pion 38 faisant saillie orthoradialement dans le logement 22.

Dans l'exemple des figures 1 et 2, chaque ressort 23 s'étend angulairement entre une première extrémité en appui contre une face 26 d'une paroi radiale 25 du composant primaire 14 et une deuxième extrémité en appui contre une face 37 d'un nez radial 36 du composant secondaire 35. Un pion 38 vient localement à l'intérieur du ressort 23 au niveau de sa deuxième extrémité.

Comme on peut le voir sur les figures 5 et 6, le composant secondaire 35, qui s'étend ici tout autour de l'axe X, peut ne pas rester à une distance constante du voile 7 lorsque l'on se déplace le long de ce composant secondaire 35 depuis l'axe X. Le composant secondaire 35 comprend dans l'exemple considéré des trous 40 pouvant servir au centrage de ce composant lors du montage du batteur 12. Le batteur 12 comprend encore dans l'exemple considéré une pièce de contact 42, indépendante du composant primaire 14, et contre laquelle le composant secondaire 35, qui est mobile par rapport à cette dernière en rotation, peut venir axialement en appui. Cette pièce de contact 42 est dans l'exemple décrit solidaire d'une rondelle de maintien 46 qui présente radialement vers l'intérieur des dents non représentées et qui viennent en appui sur la rondelle de friction 28.

Des rampes sont ménagées dans la pièce de contact 42 et ces rampes coopèrent avec des contre-rampes 47 ménagées dans le composant secondaire 35. Les formes des rampes et des contre-rampes varient angulairement, de sorte que la pièce de contact 42 exerce sur le composant secondaire 35 un couple de frottement ou d'hystérésis variable lors du déplacement en rotation du composant secondaire 35 par rapport à cette pièce de contact 42, de sorte qu'un système générateur d'hystérésis est obtenu. Les formes des rampes sont par exemple choisies de manière à ce que le couple d'hystérésis soit maximal lorsque le composant secondaire 35 se déplace par rapport à la pièce de contact 42 selon son amplitude de rotation. Cette valeur maximale de couple d'hystérésis est par exemple de l'ordre de 2 Nm.

Le disque de friction de l'exemple considéré comprend encore une plaque d'arrêt axial 48 non représentée sur les figures 1 et 2, et qui est par exemple sertie sur le moyeu 2. Cette plaque d'arrêt axial 48 permet d'immobiliser axialement le dispositif d'amortissement 12 au niveau de son extrémité axiale opposée au voile 7.

Le disque de friction 1 selon l'invention comprend encore un limiteur de couple 50 qui va maintenant être décrit. Le limiteur de couple 50 est ici une rondelle élastiquement déformable qui est introduite dans l'espace radial 18. Comme représenté sur les figures 3 et 4, la rondelle élastiquement déformable 50 présente, avant son introduction dans cet espace radial 18 une forme sensiblement carrée, cette forme étant modifiée une fois la rondelle 50 en place. La rondelle 50 présente dans l'exemple décrit une fente 51.

Une fois introduite dans l'espace radial 18, la rondelle élastiquement déformable 50 présente successivement angulairement une alternance de zones 53 en contact avec le moyeu 2 et de zones 54 en contact avec la partie 15 du composant primaire 14 du batteur 12.

Tant que le couple appliqué sur le batteur 12 est inférieur à une valeur prédéfinie qui est par exemple comprise entre 4 Nm et 8 Nm, le limiteur de couple 50 exerce une force radiale maintenant le batteur 12 solidaire du moyeu 2.

En revanche, lorsque le couple appliqué sur le batteur 12 devient trop important, par exemple lorsque le batteur 12 est excité à sa fréquence de résonance, le couple qu'il exerce sur le limiteur de couple 50 dépasse la valeur prédéfinie. Le batteur 12 glisse alors par rapport au moyeu 2, ce qui permet de dissiper l'énergie générée dans le batteur 12, et donc de protéger ce dernier.

L'invention n'est pas limitée à l'exemple qui vient d'être décrit.

Le disque de friction 1 peut par exemple comprendre un amortisseur de torsion autre que le batteur 12, auquel cas le voile 7 est mobile en rotation par rapport au moyeu 2 autour de l'axe X, et auquel cas d'autres ressorts sont prévus pour limiter ce mouvement de rotation du voile 7 par rapport au moyeu 2.

L'expression « comprenant un » doit être comprise comme synonyme de l'expression « comprenant au moins un », sauf lorsque le contraire est spécifié.

## Revendications

1. Disque de friction (1) pour embrayage, comprenant :
- au moins une garniture de friction (9) définissant une entrée en couple,
- un moyeu (2) mobile en rotation autour d'un axe (X) et définissant une sortie en couple,
- un dispositif d'amortissement d'oscillations de torsion (12), porté par le moyeu (2) et disposé hors du chemin emprunté par le couple transmis par le disque (1) entre l'entrée en couple et la sortie en couple, le dispositif d'amortissement (12) présentant une unique fréquence de résonance, et
- un limiteur de couple (50) disposé de manière à exercer une force de frottement comprenant une composante orientée radialement sur le dispositif d'amortissement (12), cette force maintenant le dispositif d'amortissement (12) solidaire en rotation du moyeu (2) tant que le couple exercé par le dispositif d'amortissement (12) sur le limiteur de couple (50) est inférieur à une valeur prédéfinie.

2. Disque de friction selon la revendication 1, la force de frottement étant dépourvue de composante autre que la composante orientée radialement.

3. Disque de friction selon la revendication 1 ou 2, le limiteur de couple (50) étant disposé radialement dans l'espace (18) compris entre le moyeu (2) et le dispositif d'amortissement d'oscillations de torsion (12).

4. Disque de friction selon l'une quelconque des revendications là 3, le limiteur de couple étant formé par une rondelle élastiquement déformable (50).

5. Disque de friction selon la revendication 4, la rondelle élastiquement déformable étant fendue.

6. Disque de friction selon l'une quelconque des revendications précédentes, le dispositif d'amortissement (12) comprenant :
- une composant primaire (14), sur laquelle le limiteur de couple (50) applique la force de frottement,
- un composant secondaire (35) mobile en rotation par rapport au composant primaire (14), et
- une pluralité d'organes de rappel élastique (23) disposés entre le composant primaire (14) et le composant secondaire (35), de manière à générer une force s'opposant à la rotation du composant secondaire (35) par rapport au composant primaire (14).

7. Disque de friction selon la revendication 6, le limiteur de couple étant une rondelle élastiquement déformable (50) disposée radialement entre le composant primaire (14) du dispositif d'amortissement (12) et le moyeu (2), et solidarisant ces derniers en rotation tant que le couple exercé par le dispositif d'amortissement (12) sur le limiteur de couple (50) est inférieur à la valeur prédéfinie.

8. Disque de friction selon la revendication 6 ou 7, chaque organe de rappel élastique (23) s'étendant entre une première extrémité en appui contre une face (26) d'une paroi radiale (25) du composant primaire (14) et une deuxième extrémité en appui contre une face (37) d'un nez radial (36) du composant secondaire (35).

9. Disque de friction selon la revendication 8, chaque paroi radiale (25) du composant primaire (14) interagissant avec deux organes de rappel élastique (23), ladite paroi (25) étant disposée angulairement entre ces deux organes de rappel élastique (23), chaque nez radial (36) du composant secondaire (35) interagissant avec deux organes de rappel élastique (23), ledit nez (36) étant disposé angulairement entre les deux organes de rappel élastique (23).

10. Disque de friction selon l'une quelconque des revendications 6 à 9, le composant primaire (14) du dispositif d'amortissement (12) définissant une pluralité de logements (22) maintenant axialement les organes de rappel élastique (23).

11. Disque de friction selon l'une quelconque des revendications 6 à 10, le composant primaire (14) du dispositif d'amortissement (12) comprenant un chanfrein (20) ménagé à une de ses extrémités axiales et en regard du limiteur de couple (50).

12. Disque de friction selon l'une quelconque des revendications précédentes, comprenant un support (6) de garniture(s) de friction mobile en rotation par rapport au moyeu (2) et un amortisseur d'oscillations de torsion, autre que le dispositif d'amortissement d'oscillations de torsion (12), et disposé entre le support (6) et le moyeu (2) et s'opposant à la rotation du support (6) par rapport au moyeu (2).

## Patentansprüche

1. Reibscheibe (1) für eine Kupplung, umfassend:
- mindestens einen Reibbelag (9), der einen Drehmomenteingang definiert,
- eine Nabe (2), die um eine Achse (X) drehbeweglich ist und einen Drehmomentausgang definiert,
- eine Drehschwingungsdämpfungsvorrichtung (12), die von der Nabe (2) getragen wird und außerhalb des Weges angeordnet ist, den das von der Scheibe (1) übertragene Drehmoment zwischen dem Drehmomenteingang und dem Drehmomentausgang nimmt, wobei die Dämpfungsvorrichtung (12) eine einzige Resonanzfrequenz aufweist, und
- einen Drehmomentbegrenzer (50), der so angeordnet ist, dass er eine Reibungskraft ausübt, die eine radial auf die Dämpfungsvorrichtung (12) gerichtete Komponente umfasst, wobei diese Kraft die Dämpfungsvorrichtung (12) verdrehgesichert an der Nabe (2) hält, solange das von der Dämpfungsvorrichtung (12) auf den Drehmomentbegrenzer (50) ausgeübte Drehmoment unter einem vorgegebenen Wert liegt.

2. Reibscheibe nach Anspruch 1, wobei die Reibungskraft keine andere Komponente als die radial gerichtete Komponente aufweist.

3. Reibscheibe nach Anspruch 1 oder 2, wobei der Drehmomentbegrenzer (50) radial in dem Raum (18) zwischen der Nabe (2) und der Drehschwingungsdämpfungsvorrichtung (12) angeordnet ist.

4. Reibscheibe nach einem der Ansprüche 1 bis 3, wobei der Drehmomentbegrenzer durch eine elastisch verformbare Scheibe (50) gebildet ist.

5. Reibscheibe nach Anspruch 4, wobei die elastisch verformbare Scheibe geschlitzt ist.

6. Reibscheibe nach einem der vorhergehenden Ansprüche, wobei die Dämpfungsvorrichtung (12) umfasst:
- ein primäres Bauteil (14), auf das der Drehmomentbegrenzer (50) die Reibungskraft anwendet,
- ein sekundäres Bauteil (35), das in Bezug auf das primäre Bauteil (14) drehbeweglich ist, und
- eine Vielzahl von elastischen Rückstellorganen (23), die zwischen dem primären Bauteil (14) und dem sekundären Bauteil (35) angeordnet sind, so dass eine Kraft erzeugt wird, die der Drehung des sekundären Bauteils (35) in Bezug auf das primäre Bauteil (14) entgegenwirkt.

7. Reibscheibe nach Anspruch 6, wobei der Drehmomentbegrenzer eine elastisch verformbare Scheibe (50) ist, die radial zwischen dem primären Bauteil (14) der Dämpfungsvorrichtung (12) und der Nabe (2) angeordnet ist und diese Letztgenannten verdrehsichert, solange das von der Dämpfungsvorrichtung (12) auf den Drehmomentbegrenzer (50) ausgeübte Drehmoment unter einem vorgegebenen Wert liegt.

8. Reibscheibe nach Anspruch 6 oder 7, wobei sich jedes elastische Rückstellelement (23) zwischen einem ersten Ende, das an einer Seite (26) einer radialen Wand (25) des primären Bauteils (14) anliegt, und einem zweiten Ende, das an einer Seite (37) einer radialen Nase (36) des zweiten Bauteils (35) anliegt, erstreckt.

9. Reibscheibe nach Anspruch 8, wobei jede radiale Wand (25) des primären Bauteils (14) mit zwei elastischen Rückstellorganen (23) zusammenwirkt, wobei die Wand (25) winklig zwischen diesen beiden elastischen Rückstellorganen (23) angeordnet ist, wobei jede radiale Nase (36) des sekundären Bauteils (35) mit zwei elastischen Rückstellorganen (23) zusammenwirkt, wobei die Nase (36) winklig zwischen den beiden elastischen Rückstellorganen (23) angeordnet ist.

10. Reibscheibe nach einem der Ansprüche 6 bis 9, wobei das primäre Bauteil (14) der Dämpfungsvorrichtung (12) eine Vielzahl von Aufnahmen (22) definiert, welche die elastischen Rückstellorgane (23) axial halten.

11. Reibscheibe nach einem der Ansprüche 6 bis 10, wobei das primäre Bauteil (14) der Dämpfungsvorrichtung (12) eine Fase (20) umfasst, die an einem seiner axialen Enden und gegenüber dem Drehmomentbegrenzer (50) ausgebildet ist.

12. Reibscheibe nach einem der vorhergehenden Ansprüche, umfassend einen Träger (6) für einen oder mehrere Reibbeläge, der in Bezug auf die Nabe (2) drehbeweglich ist, und einen Drehschwingungsdämpfer, der nicht die Drehschwingungsdämpfungsvorrichtung (12) ist, der zwischen dem Träger (6) und der Nabe (2) angeordnet ist und der Drehung des Trägers (6) in Bezug auf die Nabe (2) entgegenwirkt.

## Claims

1. Clutch friction disc (1), comprising:
- at least one friction lining (9) defining a torque input,
- a hub (2) that is able to rotate about an axis (X) and defines a torque output,
- a torsional oscillation damping device (12) that is borne by the hub (2) and is arranged outside the path taken by the torque transmitted by the disc (1) between the torque input and the torque output, the damping device (12) having a single resonant frequency, and
- a torque limiter (50) arranged so as to exert a friction force comprising a component oriented radially on the damping device (12), this force keeping the damping device (12) co-rotational with the hub (2) as long as the torque exerted by the damping device (12) on the torque limiter (50) is below a predefined value.

2. Friction disc according to Claim 1, the friction force having no other component than the radially oriented component.

3. Friction disc according to Claim 1 or 2, the torque limiter (50) being arranged radially in the space (18) between the hub (2) and the torsional oscillation damping device (12).

4. Friction disc according to any one of Claims 1 to 3, the torque limiter consisting of an elastically deformable ring (50).

5. Friction disc according to Claim 4, the elastically deformable ring being split.

6. Friction disc according to any one of the preceding claims, the damping device (12) comprising:
- a primary component (14) on which the torque limiter (50) applies the friction force,
- a secondary component (35) that is able to move in rotation with respect to the primary component (14), and
- a plurality of elastic return members (23) arranged between the primary component (14) and the secondary component (35) so as to produce a force opposing rotation of the secondary component (35) with respect to the primary component (14).

7. Friction disc according to Claim 6, the torque limiter being an elastically deformable ring (50) that is arranged radially between the primary component (14) of the damping device (12) and the hub (2), and secures these in rotation as long as the torque exerted by the damping device (12) on the torque limiter (50) is below the predefined value.

8. Friction disc according to Claim 6 or 7, each elastic return member (23) extending between a first end that presses against the face (26) of a radial wall (25) of a primary component (14) and a second end that presses against a face (37) of a radial lug (36) of the secondary component (35).

9. Friction disc according to Claim 8, each radial wall (25) of the primary component (14) interacting with two elastic return members (23), said wall (25) being arranged angularly between these two elastic return members (23), each radial lug (36) of the secondary component (35) interacting with two elastic return members (23), said lug (36) being arranged angularly between the two elastic return members (23).

10. Friction disc according to any one of Claims 6 to 9, the primary component (14) of the damping device (12) defining a plurality of recesses (22) that axially hold the elastic return members (23).

11. Friction disc according to any one of Claims 6 to 10, the primary component (14) of the damping device (12) comprising a chamfer (20) created at one of its axial ends and facing the torque limiter (50).

12. Friction disc according to any one of the preceding claims, comprising a friction lining support (6) able to move in rotation with respect to the hub (2) and a torsional oscillation damper, other than the torsional oscillation damping device (12), and arranged between the support (6) and the hub (2) and opposing the rotation of the support (6) with respect to the hub (2).
